# EUROPÄISCHE PATENTSCHRIFT

(11) **EP 3 436 267 B1**
(45) Veröffentlichungstag und Bekanntmachung des Hinweises auf die Patenterteilung: **29.04.2020**
(21) Anmeldenummer: 16710950.3
(22) Anmeldetag: 14.03.2016
(51) Int. Cl.: B32B 27/32, C08J 5/18, B32B 3/30, C09K 3/10

(54) **MEHRSCHICHTIGE SIEGELFOLIE UND FOLIENLAMINAT MIT MEHRSCHICHTIGER SIEGELFOLIE**
MULTILAYER SEALING FILM, AND FILM LAMINATE WITH MULTILAYER SEALING FILM
FEUILLE DE SCELLEMENT MULTICOUCHE ET FEUILLE STRATIFIÉE MUNIE D'UNE FEUILLE DE SCELLEMENT MULTICOUCHE

(43) Veröffentlichungstag der Anmeldung: 06.02.2019
(73) Patentinhaber: Constantia Pirk GmbH & Co. KG, 92712 Pirk (DE)
(72) Erfinder: GREFENSTEIN, Achim, 67122 Altrip (DE); GEITNER, Werner, 92637 Weiden (DE); GEILLERSDÖRFER, Ingo, 92708 Mantel (DE)
(74) Vertreter: Patentanwälte Pinter & Weiss OG
(86) Internationale Anmeldenummer: PCT/EP2016/055406
(87) Internationale Veröffentlichungsnummer: WO 2017/157410

(56) Entgegenhaltungen:
- EP-A1- 0 618 070
- EP-A1- 2 149 447
- EP-A1- 2 799 234
- EP-A2- 0 715 952
- EP-A2- 1 340 694
- WO-A1-2006/096894
- FR-A1- 2 753 996
- FR-A1- 2 753 997
- JP-A- H0 524 158
- JP-A- 2000 191 029
- JP-A- 2003 181 962

## Beschreibung

Die gegenständliche Erfindung betrifft eine mehrschichtige Siegelfolie aus einem siegelfähigen Polymer, insbesondere einem Polyolefin oder einer Mischung mit einem Polyolefin, mit einer Schichtdicke im Bereich von 10µm bis 100µm, vorzugsweise 10 µm bis 80 µm und ganz besonders vorzugsweise im Bereich von 20 µm bis 70 µm. Weiters betrifft die Erfindung ein Folienlaminat aus einer Trägerschicht und einer damit verbundenen Siegelschicht aus der erfindungsgemäßen mehrschichtigen Siegelfolie und eine Verpackung mit einem solchen Folienlaminat.

Eine mehrschichtige Siegelfolie für eine Siegelschicht wird beispielsweise durch Blasfolienextrusion oder Flachfolienextrusion hergestellt. Das Folienlaminat mit einer Siegelschicht aus einer Siegelfolie für die Herstellung einer Verpackung, wie ein Beutel, wird in der Regel durch Kaschieren (also Verbinden mittels der Klebeschicht) mehrerer Folien erzeugt. Ebenso ist es bekannt, das Folienlaminat durch Koextrusion herzustellen, wobei die mehrschichtige Siegelfolie direkt aus der Schmelze auf eine Trägerschicht des Folienlaminats koextrudiert wird. Bei der Herstellung von Siegelfolien aus geblasenem Polyethylen (PE) (typisch für Blasfolie) oder gegossenem Polypropylen (PP) (typisch für Castfolie) werden nach dem heutigen Stand der Technik sogenannte Slipadditive (Gleitmittel) und/oder Antiblockadditive zugegeben. Diese haben die Aufgabe, die meist recht stumpfen Polyolefine (wie PE oder PP) glatter zu machen, so dass diese in der Weiterverarbeitung besser über die Metalloberflächen der Verpackungsmaschinen oder gegen sich selbst gleiten können. Wird dies nicht gemacht, kann es zu unerwünschten Anlagenstillständen und/oder faltigen Siegelnähten bzw. undichten Verpackungen kommen.

Für die Verarbeitung solcher Folienlaminate in Verpackungsmaschinen werden typischerweise Reibkoeffizienten (COF=Coefficient of Friction) der Siegelschicht gegenüber Stahl im Bereich von 0,15 bis 0,30 und der Siegelschicht gegen sich selbst im Bereich von 0,2 bis 0,4 gefordert. Insbesondere bei der Verarbeitung der Folienlaminate zu Beuteln, sogenannten Flowpacks, in FFS-Anlagen (Form-fill-seal) ist der Reibkoeffizient gegen Stahl ein entscheidendes Qualitätsmerkmal eines Verpackungslaminates.

Die in der gegenständlichen Anmeldung angegebenen Reibkoeffizienten werden mit der folgenden Prüfvorschrift ermittelt:
Auf einen Prüfklotz der Dimension 66 x 60 x 16 mm und einem Gewicht von 500g wird auf einer Seite des Prüfklotzes (66 x 60 mm) ein Muster einer knitter- und faltenfreie Siegelfolie gespannt. Die zu prüfende Oberfläche der Folie muss dabei natürlich nach außen weisen. Das Muster der Folie kann zum Einspannen größer sein, als die Größe der Seite des Prüfklotzes. Der Prüfklotz wird zur Messung des Reibkoeffizienten gegen Stahl mit der Seite, auf der die Folie aufgespannt ist, auf einen Stahltisch gelegt. Der Prüfklotz wird dann über den Stahltisch gezogen und die dafür benötigte Kraft gemessen. Der Reibkoeffizient wird dann als Verhältnis der gemessenen Kraft und der Gewichtskraft des Prüfklotzes (500g) ermittelt. Für die Messung des Reibkoeffizienten der Siegelschicht gegen sich selbst, wird genauso vorgegangen, nur wird auf den Prüftisch ebenso eine knitter- und faltenfreie Folie gespannt (mit der zu prüfenden Seite nach außen), auf der der Prüfklotz aufgelegt wird. Mit einer Zugprüfmaschine wird der Prüfklotz mit einer konstanten Geschwindigkeit von 150 mm/min über eine Messstrecke von 50 mm über den Untergrund gezogen und die Zugkraft gemessen.

Es wird dabei üblicherweise der sogenannte statische Reibkoeffizient, der sich aus der Maximalkraft ergibt, bevor sich der Prüfklotz bewegt, und der sogenannte dynamische Reibkoeffizient unterschieden. Letzterer ergibt sich aus der nahezu konstanten, mittleren Kraft während der konstanten, ruckfreien Bewegung des Prüfklotzes. Zu stumpfe Folien bewegen sich nur ruckartig und können somit nicht vermessen werden, da die Kräfte zu stark schwanken. Solche Folien sind in der Praxis unbrauchbar.

Um diese Reibkoeffizienten zu erreichen werden nach dem Stand der Technik der Siegelfolie Slipadditive (Gleitmittel) und/oder Antiblockadditive zugegeben. Antiblockadditive werden dabei in hohen Mengen, durchaus im Bereich von 1000ppm, zugegeben. Slipadditive werden in der Siegelfolie mit Slipadditivkonzentrationen mit einem S-Wert von 16.000 bis 25.000 verwendet. Der S-Wert ist dabei definiert als Produkt aus der Dicke der Siegelfolie und dem Gehalt an Slipadditiv in ppm (parts per million). Bei einer mehrschichtigen Folie berechnet man den S-Wert der Folie üblicherweise, indem der S-Wert jeder einzelnen Schicht (Gehalt an Slipadditiv in der Schicht x Dicke der einzelnen Schicht) berechnet wird und die S-Werte der einzelnen Schichten zum S-Wert der Folie addiert werden. Das ist gleichwertig zur Ermittlung eines auf die Schichtdicken der Schichten gewichteten, mittleren Gehalts an Slipadditiv in ppm der Folie (Mittelwert über alle Schichten) und Multiplikation mit der Gesamtdicke der Folie.

Als Slipadditive werden üblicherweise Ölsäureamide oder mittlerweile bevorzugt Erucasäureamide (ESA) eingesetzt, die aus der Siegelfolie mit der Zeit nach außen wandern und sich auf der Oberfläche der Siegelfolie ablagern und dort als Gleitfilm wirken. Größter Nachteil dieser Produkte ist, dass diese Slipadditive migrieren, wodurch folgende Nachteile entstehen können:
- Die Gleitreibung der PE oder PP Siegelfolie verändert sich mit steigender Temperatur durch bessere Löslichkeit der Slipadditive im PE bzw. PP, wodurch sich die Verarbeitungsbedingungen eines Folienlaminats mit einer solchen Siegelfolie als Siegelschicht verändern.

Das kann die Verarbeitung solcher Folienlaminate (in einer Verpackungsmaschine) oder solcher Siegelfolien (in einem Kaschierprozess) erheblich erschweren.
- Die Gleitreibung verändert sich nach dem Kaschieren des Folienlaminats durch Migration der Slipadditive aus der Siegelfolie in den Kleber und/oder Kaschierpartner, wodurch sich wiederum die Verarbeitungsbedingungen verändern können. Das kann die Verarbeitung solcher Folienlaminate erheblich erschweren.
- Der Kaschierpartner der Siegelfolie, z.B. BOPET (biaxial orientiertes Polyethylenterephthalat) oder BOPP (biaxial orientiertes Polypropylen), wird glatter durch die Aufnahme des Slipadditivs. Das kann dazu führen, dass das Folienlaminat nicht mehr in der Verpackungsanlage transportiert werden kann, wodurch eine Weiterverarbeitung unmöglich wäre.

Die Migration der Slipadditive ist auch der Grund warum der S-Wert für eine mehrschichtige Folie wie oben ausgeführt berechnet wird. Durch die Migration der Slipadditive stellt sich sehr rasch ein Ausgleich der Konzentrationen an Slipadditiv in den einzelnen Schichten der Siegelfolie ein, sodass nur mehr von einem S-Wert für die gesamte Siegelfolie ausgegangen werden kann.

Antiblockadditive sind meist mineralische Füllstoffe (beispielsweise Silikate oder Talkum), durch deren Zugabe die Oberflächenrauigkeit der Siegelfolie erhöht wird. Antiblockmittel neigen zwar nicht zur Migration, können jedoch alleine den Reibkoeffizienten (COF=Coefficient of Friction) der Siegelfolie, und damit die Gleiteigenschaften, nicht ausreichend herabsetzen. Während reines PE einen COF von 0,5 bis über 1 (komplettes Verblocken) hat, können mit Antiblockadditiven alleine minimale Reibkoeffizienten von 0,3 gegen Stahl erzeugt werden. Dies aber auch nur bei hoher Zugabekonzentration und reduzierter Transparenz der resultierenden Siegelfolie, was in der Regel unerwünscht ist. Zum Erreichen des gewünschten niedrigen COF wurde daher bisher die Zugabe von Slipadditiven für notwendig erachtet. Niedrige Konzentrationen von Slipadditiv können durch zusätzliche Zugabe von Antiblockadditiven ausgeglichen werden, um trotzdem einen niedrigen COF zu erreichen. Das kann z.B. der WO 98/37143 A1 entnommen werden, in der eine mehrschichtige Folie mit Slipadditiv und Antiblockadditiv offenbart ist. Ein niedriger S-Wert der Folie wird darin durch eine hohe Konzentration von Antiblockadditiv im Bereich von ≥ 1000ppm ausgeglichen.

Bei der Herstellung von Verpackungen in Form von Beuteln wird oftmals ein Folienlaminat wie oben beschrieben zu einem Beutel gefaltet und verschweißt bzw. versiegelt. Die Folie ist dabei typischerweise ein mehrschichtiges Laminat, z.B. aus einer transparenten Außenschicht, wie z.B. aus BOPET (biaxial orientiertes Polyethylenterephthalat) oder BOPP (biaxial orientiertes Polypropylen), einer innenliegenden Siegelschicht aus einem siegelfähigem Polymer in Form einer Siegelfolie wie oben beschrieben, wie z.B. aus PE (Polyethylen) oder PP (Polypropylen), und einer optionalen dazwischenliegenden Barriereschicht, wie z.B. aus Aluminium oder metallisiertem Kunststoff (z.B. metallisiertes PET). Das Siegeln oder Schweißen erfolgt, wie hinlänglich bekannt ist, typischerweise zwischen temperierten Siegelbacken, die zusammengepresst werden, wodurch die Siegelschicht der Folie aufschmilzt und beim nachfolgenden Abkühlen die Verbindung herstellt. Siegelfähig bedeutet daher in diesem Zusammenhang, dass die Schmelztemperatur der Siegelschicht das Siegeln ermöglicht. Als Material für die Siegelschicht kommen verschiedenste Materialien zum Einsatz, die bei typischen Siegeltemperaturen über 100°C schmelz- und zusammenpressbar sein sollen. Diese Anforderung führt zu verschiedenen Mischungen und Co-Extrudaten von LDPE (low density Polyethylen), LLDPE (linear low density Polyethylen), EVA (Ethylenvinylacetat) und ähnlichen Materialien. Durch das Falten der Folie kommt es im Überlappungsbereich aber zu unterschiedlichen Materialdicken, was beim Siegeln zu unvollständigen Siegelnähten führen kann, womit der erzeugte Beutel z.B. unerwünschte Luftkanäle ausbildet.

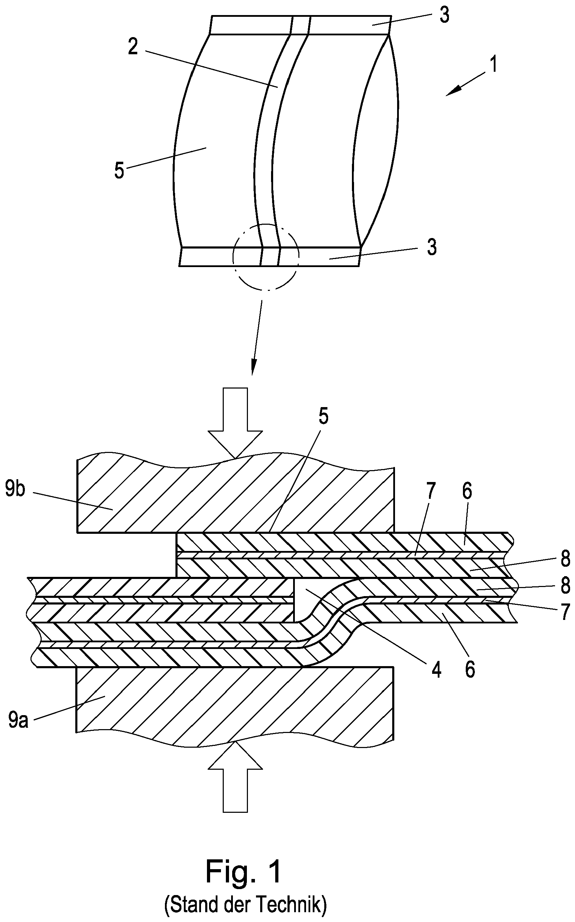

Das ist in Fig.1 am Beispiel eines Beutels 1, hier ein vertikaler Schlauchbeutel, schematisch dargestellt. Die Folie des Beutels 1 wird hier zuerst der Länge nach zu einem Schlauch zusammengefaltet und entlang der Längsnaht 2 versiegelt. Am oberen und unteren Ende des Beutels 1 wird der Schlauch zur Bildung eines Beutels 1 mit jeweils einer Quernaht 3 versiegelt, wodurch das darin befindliche Füllgut im Beutel 1 eingeschlossen ist. Der Überlappungsbereich der beiden Siegelnähte, also zwischen Längsnaht 2 und Quernaht 3, ist in Fig.1 vergrößert dargestellt. Aufgrund der unterschiedlichen Materialstärken entlang der Quernaht 3 kann es passieren, dass die überlappende Folie 5, insbesondere im Bereich überlappender Siegelnähte, durch die Siegelbacken 9a, 9b nicht gänzlich zusammengepresst werden kann, wodurch es beim Siegeln der Quernaht 3 in diesem Bereich zur Ausbildung eines Luftkanals 4 kommen kann, wodurch der Beutel undicht ist. Die Folie 5 ist hier als dreischichtiges Laminat mit einer äußeren BOPET-Schicht 6, einer Zwischenschicht 7 aus Aluminium und einer inneren Siegelschicht 8 aus PP ausgeführt. Ähnliche Probleme treten auch bei anderen Beuteltypen, wie beispielsweise Kreuzbodenbeutel, Standbeutel, Blockbodenbeutel, usw., im Überlappungsbereich mehrerer Folienschichten auf.

Ähnliche Probleme können beim Siegeln von sogenannten folienartigen Platinen (in der Regel aus einer Aluminium Basisschicht und einer darauf aufgebrachten Siegelschicht) auf dem Rand von Kunststoffbehältern auftreten, wie z.B. bei Jogurt Verpackungen üblich. Solche folienartigen Platinen sind in der Regel aus Aluminium, Kunststoff oder Papier, auf das eine Siegelschicht aufgebracht wird, ausgeführt. Aufgrund von Fertigungstoleranzen bei der Herstellung der Kunststoffbehälter und/oder bei der Herstellung der Folienlaminate der Platinen kann es auch hier zu Dickenunterschieden kommen, die beim Siegeln durch den Druck der Siegelbacken nicht ausgeglichen werden können, was zu Undichtheit der Verpackung führen kann.

Um dieses Problem beim Siegeln zu reduzieren wurden bereits spezielle Materialen für die Verwendung als Siegelschicht entwickelt, die jedoch relativ teuer sind und daher in der Verpackungsindustrie zögerlich eingesetzt werden.

Die Dicke der Siegelschicht kann dabei nicht reduziert werden, da die Siegelschicht eine gewisse Kompressibilität aufweisen muss. Um die Siegelschicht dünner machen zu können, werden dem Material der Siegelschicht oftmals spezielle Polymere zugemischt, die das Material aber ebenfalls wieder verteuern.

In der EP 2 537 770 A1 wird ein Folienmaterial mit einer geschäumten Polymerschicht beschrieben, insbesondere zur Herstellung von Beutel für körniges Stückgut. Durch die geschäumte Polymerschicht soll erreicht werden, dass sich das körnige Stückgut nicht an der äußeren Beuteloberfläche abzeichnet.

Die US 2011/0293204 A1 beschreibt eine geschäumte, kompressible Polymerschicht als Siegelschicht, um die Siegeleigenschaften zu verbessern.

Die US 2005/0247960 A1 wiederum beschreibt eine Folie mit einer geprägten Siegelschicht zur Ausbildung eines Beutels zum Vakuumverpacken, wobei durch die Prägung Spalte ausgebildet werden, die beim Vakuumverpacken Luftkanäle ausbilden, durch die Luft besser abgesaugt werden kann. Als Prägung kann ein sichtbares Muster, z.B. in Form von Buchstaben oder einer beliebigen Form, vorgesehen sein. Damit die Prägung mit freiem Auge gut sichtbar ist und um die Funktion als Luftkanal bei der Vakuumverpackung sicher zu stellen, muss die Prägung relativ tief, in der Regel wesentlich tiefer als 100µm, ausgeführt sein. Die ausgebildeten Luftkanäle müssen >∼1mm breit sein, damit ein vernünftiger Volumenstrom zum Absaugen der Luft aus der Verpackung realisiert werden kann.

Geprägte Siegelschichten werden auch verwendet, um zu verhindern, dass beim Übereinanderstapeln von Deckelplatinen diese aneinander haften, was zu Problemen bei der Verarbeitung in Verarbeitungsmaschinen nach sich ziehen kann. Durch die Prägung wird zwischen einzelnen aneinander liegenden Deckelplatinen ein Luftpolster geschaffen, wodurch sich die Deckelplatinen einfach und sicher vereinzeln lassen. Beispiele dafür finden sich in der EP 2 149 447 A1 oder der WO 2006/096894 A1.

Die JP H05 24158 A beschreibt ein Verpackungslaminat aus einer Siegelschicht und einer Trägerschicht, wobei in die Siegelschicht kein Slipadditiv zugesetzt wird und an der Siegelschicht zur Reduzierung des COF des Verpackungslaminats gegen sich selbst Oberflächenstrukturen vorgesehen sind. Auch die JP 2003 181 962 A, die FR 2 753 996 A1 und die FR 2 753 997 A1 beschreiben Verpackungslaminate mit Oberflächenstrukturen zur Reduzierung des COF.

Es ist nun eine Aufgabe der gegenständlichen Erfindung eine mehrschichtige Siegelfolie anzugeben, mit der sowohl die durch das Zusetzen von Slipadditiven verursachten Probleme zur Einstellung eines für die Verarbeitung benötigten Reibkoeffizienten, als auch die Probleme beim Siegeln solcher Siegelfolien bei auftretenden Dickenunterschieden im Siegelbereich ohne visuelle Beeinträchtigung des entstehenden Produkts reduziert werden können.

Diese Aufgabe wird erfindungsgemäß dadurch gelöst, in dem auf einer ersten Seite der Siegelfolie Oberflächenstrukturen eingearbeitet sind und der Siegelfolie ein Slipadditiv in einer maximalen Menge zugesetzt ist, die einen S-Wert von kleiner 10.000, vorzugsweise kleiner 5.000, ergibt, um unabhängig von einer Zugabe von einem Antiblockadditiv in die Siegelfolie mit der Seite mit den Oberflächenstrukturen einen COF gegenüber Stahl von dynamisch kleiner 0,3, bevorzugt kleiner 0,27, und statisch kleiner 0,35, bevorzugt kleiner 0,3, zu erreichen.

Durch die Oberflächenstrukturen wird einerseits die Kompressibilität der Siegelfolie erhöht, was es ermöglicht, auftretende Dickenunterschiede im Siegelbereich besser auszugleichen. Außerdem kann die benötigte Materialmenge der Siegelfolie reduziert werden, da durch die Oberflächenstrukturen die mittlere Dicke der Siegelfolie verringert wird. Andererseits wurde aber auch festgestellt, dass durch die Oberflächenstrukturen mit weniger oder gar keinen Slipadditiven, unabhängig von eventuell vorhandenen Antiblockadditiven, gleichzeitig auch ein COF erreicht werden kann, der für die Verarbeitung der Siegelfolie günstig ist. Durch die Oberflächenstrukturen lassen sich damit mit einer einzigen Maßnahme zwei an sich voneinander unabhängige Zielsetzungen verwirklichen.

Es wurde insbesondere überraschender Weise zusätzlich festgestellt, dass eine erfindungsgemäße Siegelfolie auch ohne bzw. mit wenig Slipadditiv einen ausreichend niedrigen COF aufweist, um in Verpackungsmaschinen weiterverarbeitet werden zu können. Damit kann bei einem erfindungsgemäßen Folienlaminat völlig unabhängig von eventuell vorhandenen Antiblockadditiven auf solche Slipadditive in der Siegelschicht verzichtet werden, oder die notwendige Menge zumindest deutlich reduziert werden, womit auch die eingangs erwähnten Nachteile und Probleme mit solchen Additiven vermieden, oder zumindest verringert, werden können.

Hierbei hat es sich als vorteilhaft herausgestellt, wenn durch die Oberflächenstrukturen die größte Dicke der Siegelfolie um zumindest 10% größer ist, als die kleinste Dicke der Siegelfolie und die größte seitliche Erstreckung der Oberflächenstrukturen kleiner als 500 µm, vorzugsweise kleiner als 400 µm, ganz besonders vorzugsweise kleiner als 250 µm, ist. Die Oberflächenstrukturen sind dabei auch so klein, dass sie mit freiem Auge nicht störend wahrgenommen werden, wodurch die Siegelfolie auch in einem Folienlaminat mit einer eine Siegelschicht ausbildenden Siegelfolie und einer damit verbundenen Trägerschicht verwendet werden kann. Damit wird die mit freiem Auge wahrnehmbare Erscheinung eines Folienlaminates mit einer solchen Siegelfolie nicht negativ beeinträchtigt.

Aus fertigungstechnischen Restriktionen kann die größte Dicke einer geprägten Kunststofffolie (die Siegelfolie) derzeit nicht beliebig hoch sein. Aufgrund der Fließfähigkeit von Kunststoffen und der derzeitigen Notwendigkeit, mit gekühlten Prägewalzen zu arbeiten, auf denen der Kunststoff erstarrt, liegt die technologische Obergrenze für die größte Dicke derzeit bei ca. 300% der kleinsten Dicke. Solange dies nicht zu optischen Beeinträchtigungen der Oberfläche führt, können im Rahmen der Erfindung aber auch größeren Dickenunterschiede zum Einsatz kommen, insbesondere, wenn die kleinste Dicke in punktförmigen Vertiefungen gemessen wird.

Der COF einer erfindungsgemäß geprägten Siegelfolie gegen sich selbst kann insbesondere dann deutlich reduziert werden, wenn die Prägestrukturen (typischerweise Pyramiden) diagonal zur Längsrichtung der Siegelfolie angeordnet sind, wobei die Längsrichtung der Bewegungsrichtung der Siegelfolie in der Verpackungsmaschine entspricht.

Die Oberflächenstrukturen sind vorteilhaft als aus der ersten Seite herausragende Strukturen ausgebildet.

Ganz besonders vorteilhaft ist es jedoch, wenn die Oberflächenstrukturen als Vertiefungen an der ersten Seite ausgebildet, da dann der COF der Siegelfolie sowohl gegen Stahl, als auch gegen sich selbst, nur durch die Oberflächenstrukturen ausreichend abgesenkt werden kann.

Gleichfalls ist es besonders vorteilhaft, wenn die Oberflächenstrukturen mit einer Grundfläche in Form eines Vielecks mit zumindest sechs Seiten ausgebildet sind, da auch dann der COF der Siegelfolie sowohl gegen Stahl, als auch gegen sich selbst, nur durch die Oberflächenstrukturen ausreichend abgesenkt werden kann.

Durch Bereiche ohne Oberflächenstrukturen oder Bereiche mit unterschiedlichen Oberflächenstrukturen können auch Logos oder Aufschriften in die Siegelfolie eingebracht werden, was insbesondere bei Verpackungen interessant ist.

Für bestimmte Anwendungen des Folienlaminats ist es vorteilhaft, wenn die Trägerschicht eine Basisschicht und eine Barriereschicht umfasst, wobei die Barriereschicht zwischen Basisschicht und Siegelschicht angeordnet ist.

Wenn die Siegelfolie eine im Blasfolien- oder Flachfolienextrusionsverfahren hergestellte PE-Folie ist, verbessert sich die Siegelfähigkeit durch den gegenüber einer geblasenen PE-Folie höheren MFI noch weiter.

Das erfindungsgemäße Folienlaminat wird ganz besonders vorteilhaft für eine durch Falten und Siegeln des Folienlaminats hergestellte Verpackung und zum Verschließen eines Behälters mittels Aufsiegeln einer Platine aus dem Folienlaminat auf einem Rand des Behälters verwendet.

Die gegenständliche Erfindung wird nachfolgend unter Bezugnahme auf die Figuren 1 bis 12 näher erläutert, die beispielhaft, schematisch und nicht einschränkend vorteilhafte Ausgestaltungen der Erfindung zeigen. Dabei zeigt
Fig.1 einen Verpackungsbeutel nach dem Stand der Technik,
Fig. 2 bis 7 eine erfindungsgemäße Siegelfolie mit Oberflächenstrukturen,
Fig.8 einen Mikrotomschnitt durch eine erfindungsgemäße Siegelfolie,
Fig.9 ein Folienlaminat mit einer erfindungsgemäßen Siegelfolie,
Fig.10 eine mehrschichtige Siegelfolie ohne Oberflächenstrukturen,
Fig.11 eine mehrschichtige Siegelfolie mit Oberflächenstrukturen und
Fig.12 die Verwendung des erfindungsgemäßen Folienlaminats als Verschluss eines Behälters.

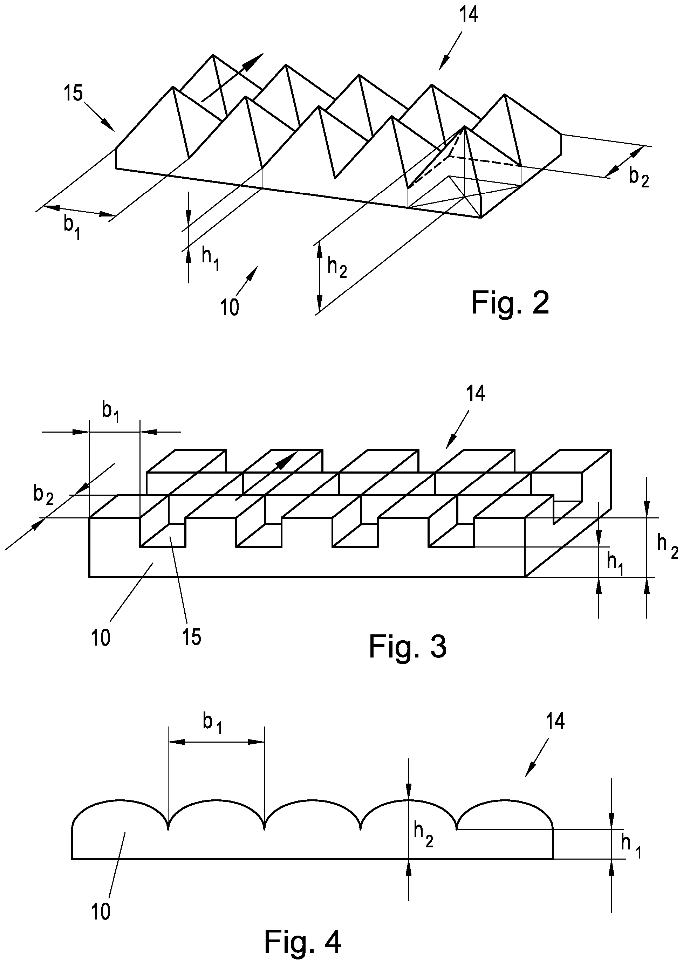

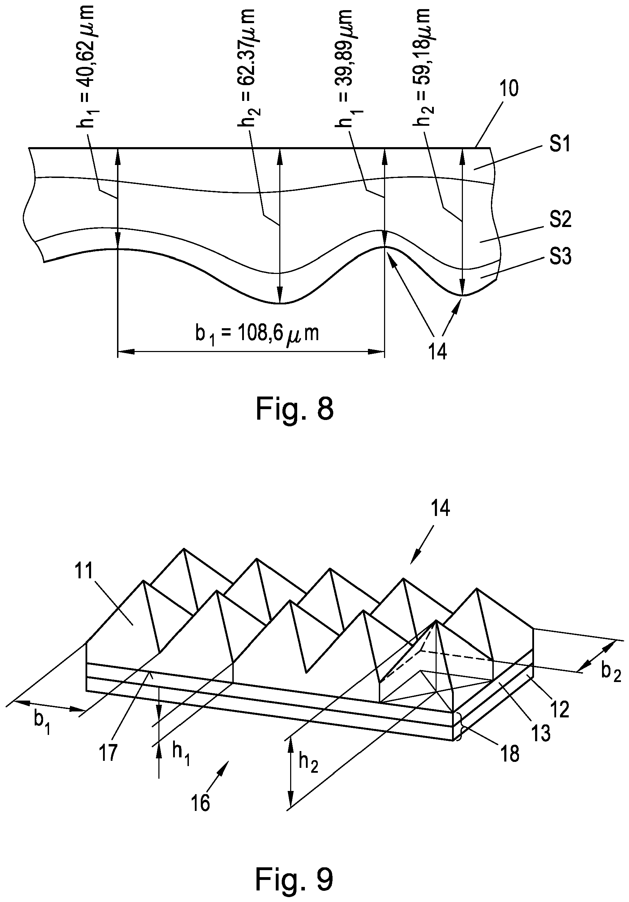

Fig.2, Fig.8 und Fig.11 zeigen eine erfindungsgemäße mehrschichtige Siegelfolie 10, beispielsweise für die Verwendung als siegelfähige Siegelschicht 11 auf einem Folienlaminat 16 (Fig.9) zur Herstellung von Verpackungen, z.B. Beuteln oder Verschlüssen von Behältern (sogenannten Platinen), mit mehreren Schichten S1, S2, S3 Die Siegelfolie 10 hat Schichten S1, S2, S3 aus siegelfähigem Polymer, vorzugsweise aus einem Polyolefin, wie z.B. Polyethylen (PE) oder Polypropylen (PP) in den verschiedenen verfügbaren Ausgestaltungen, beispielsweise als LDPE (low density Polyethylen) oder LLDPE (linear low density Polyethylen), oder aus einer Mischung mit einem solchen Polyolefin. Oftmals werden in mehrschichtigen Siegelfolien 10 auch Mischungen aus einem Polyolefin mit einem Plastomer, also einem Polyolefin mit einer besonders niedrigen Dichte kleiner 0,9 kg/dm³, eingesetzt. Die mehrschichtige Siegelfolie 10 kann beispielsweise in bekannter Weise durch Koextrudieren der Schichten S1, S2, S3 oder durch Kaschieren der Schichten S1, S2, S3 erzeugt werden. Obwohl die erfinderische Siegelfolie 10 in den Beispielen als dreischichtige Siegelfolie 10 dargestellt ist, ist anzumerken, dass die Anzahl der Schichten nicht auf drei beschränkt ist. Heute verwendete Siegelfolien 10 haben durchaus fünf oder mehr Schichten.

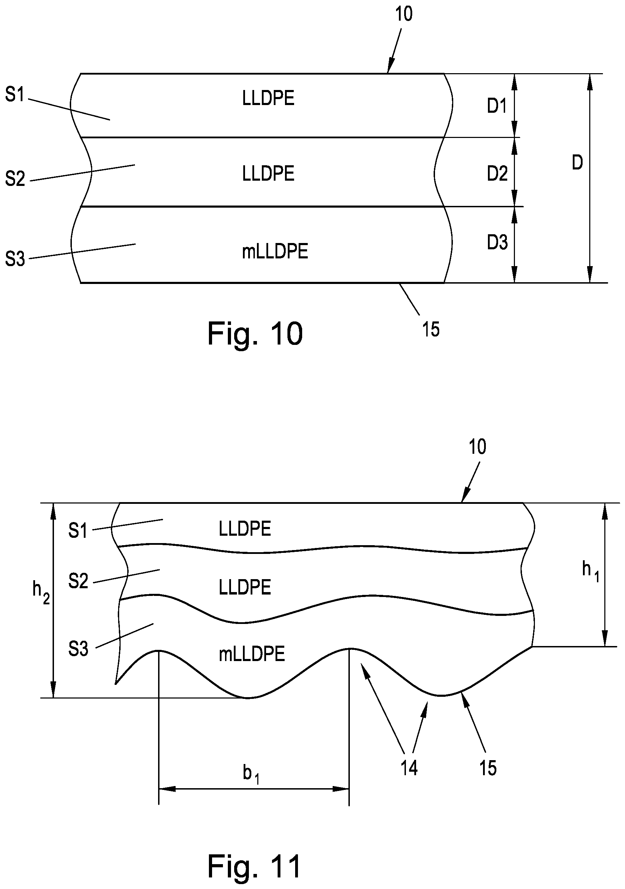

Die Siegelfolie 10 hat an einer ersten Seite 15 Oberflächenstrukturen 14 eingeformt, z.B. eingeprägt. Durch die Oberflächenstrukturen 14 werden die Schichten S1, S2, S3 gleichmäßig deformiert, wobei die Schichten S3, S2 nahe der ersten Seite 15 natürlich stärker deformiert werden, als die Schichten S1 an der gegenüberliegenden Seite, wie in Fig. 8 und 11 ersichtlich. In der Fig.2 sind die nebeneinander angeordneten Oberflächenstrukturen 14 quer zur Längsrichtung (angedeutet durch den Pfeil) der Siegelfolie 10 angeordnet. Die Siegelfolie 10 hat durch die Oberflächenstrukturen 14 eine Dicke, die zwischen einer kleinsten Dicke h₁ und einer größten Dicke h₂ variiert (Fig.11). Die Oberflächenstrukturen 14 haben seitliche Erstreckungen b₁, b₂ in der sich flächig erstreckenden Ebene der Siegelfolie 10.

Die Oberflächenstrukturen 14 können dabei unterschiedlichst ausgeführt sein, beispielsweise pyramidenförmig wie in Fig.2, oder auch quaderförmig wie in Fig.3 angedeutet oder kuppelförmig wie in Fig.4 angedeutet. Die Pyramiden der Ausführung nach Fig.2 müssen dabei keine quadratische oder rechteckförmige Grundfläche haben, sondern die Grundfläche kann im Prinzip beliebig ausgestaltet sein.

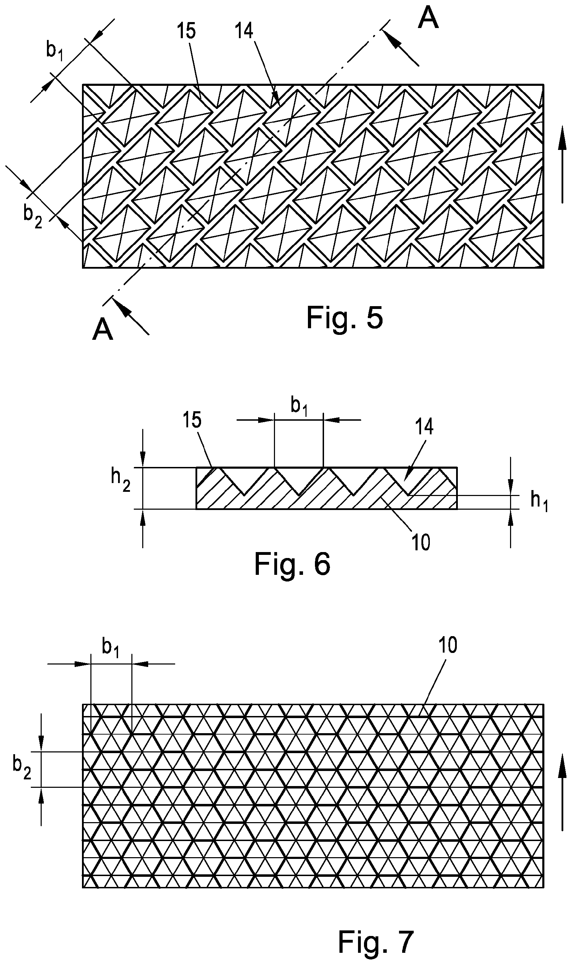

In den Beispielen der Fig.2 bis 4 stehen die Oberflächenstrukturen 14 aus der Ebene bzw. aus der ersten Seite 15 der Siegelfolie 10 hervor. Es sind aber auch Oberflächenstrukturen 14 möglich, die als Vertiefungen in der Siegelfolie 10 ausgeführt sind, beispielsweise als versenkte Pyramiden, wie in Fig.5 in einer Draufsicht und in Fig.6 in einem Schnitt A-A angedeutet. Dabei ist die Spitze der Pyramide ausgehend von der ersten Seite 15 vertieft. Auch hier kann die Grundfläche der versenkten Pyramiden im Prinzip beliebig gestaltet sein. Im Ausführungsbeispiel nach Fig.5 erkennt man weiters, dass die nebeneinander liegenden Oberflächenstrukturen 14 diagonal zur Längsrichtung (angedeutet durch den Pfeil) der Siegelfolie 10 ausgerichtet sind.

Bei einer hexagonalen Grundfläche, wie in Fig.7 dargestellt, egal ob als versenkte Strukturen oder als sich aus der Ebene erhebende Strukturen, ergeben sich besonders vorteilhafte Eigenschaften der Siegelfolie 10, wie weiter unten noch ausgeführt ist.

Auch andere Formen der Oberflächenstrukturen 14 als die in den Figuren 2 bis 7 dargestellten sind natürlich denkbar.

Die Oberflächenstrukturen 14 können durch ein beliebiges geeignetes Verfahren eingebracht werden, z.B. durch Prägen der Siegelfolie 10 mittels Prägewalzen nach der Blasfolienextrusion oder Flachfolienextrusion (off-line Verfahren). Die Herstellung der Oberflächenstrukturen 14 kann auch in-line, unter Nutzung der Schmelzwärme der Folienherstellung erfolgen. Das kann insbesondere angewendet werden, wenn die Siegelfolie 10 in der Flachfolienextrusion direkt auf eine Trägerschicht eines Folienlaminats koextrudiert wird. Man spricht hier auch von Extrusionsbeschichtung.

Entscheidend für die angestrebten Eigenschaften der erfindungsgemäßen Siegelfolie 10 sind die Dimensionen der Oberflächenstrukturen 14. Dafür muss die größte Dicke h₂ der Siegelfolie 10 um mindestens 10% größer sein als die kleinste Dicke h₁ der Siegelfolie 10, da ansonsten nicht genügend Material bei überlappenden Siegelnähten verdrängt werden kann.

Aus praktischen Gründen bzw. fertigungstechnischen Einschränkungen ist es vorteilhaft, wenn die größte Dicke h₂ maximal 300% größer als die kleinste Dicke h₁ der Siegelfolie 10 ist. Insbesondere soll die Oberflächenstruktur 14 der Siegelfolie 10 für das freie Auge nicht sichtbar sein, sondern sich allenfalls in einer höheren Mattigkeit einer homogenen Oberfläche der Siegelfolie 10 äußern.

Diese Dicken h₁, h₂ können in der Praxis, falls nicht bekannt, mit dem hinlänglich bekannten Verfahren der Mikrotomie ermittelt werden. Dabei werden Dünnschnitte (Mikrotomschnitte) eines Ausschnitts der Siegelfolie 10 angefertigt, die dann mikroskopisch untersucht werden. In Fig.8 ist schematisch ein Mikrotomschnitt durch eine erfindungsgemäße Siegelfolie 10 dargestellt. Im Mikrotomschnitt sind natürlich auch die einzelnen Schichten S1, S2, S3 der mehrschichtigen Siegelfolie 10 erkennbar. Die Oberflächenstrukturen 14 sind in den Figuren 2 bis 7 idealisiert dargestellt. In der Praxis kann es natürlich, allein schon aufgrund der Probenpräparation bzw. dadurch, dass ein solcher Schnitt niemals exakt parallel zu den geometrischen Strukturen vorgenommen wird, und auch aufgrund des Herstellverfahrens (z.B. Prägeverfahren) vorkommen, dass die gewünschten Strukturen nicht ideal in der Siegelfolie 10 abgebildet werden, wie in Fig.8 angedeutet. Einzelne Elemente der Oberflächenstrukturen 14 in der Siegelfolie 10 müssen auch nicht unmittelbar aneinandergrenzen, wie z.B. in Fig.3 oder Fig. 5 angedeutet.

Die größte Dicke h₂ des Ausschnitts der Siegelfolie 10 in Fig.8 ist hier 62,37 µm und die kleinste Dicke h₁ 39.89 µm, womit die größte Dicke h₂ um 56.4% größer ist als die kleinste Dicke h₁. Es könnte aber auch aus den am Ausschnitt messbaren maximalen und/oder minimalen Dicken ein Mittelwert ermittelt werden und daraus das Verhältnis der beiden Dicken zueinander bestimmt werden. Im Beispiel nach Fig.8 wäre die mittlere größte Dicke h₂ₘ = 60.78 µm ((62,37 + 59,18)/2), womit die mittlere größte Dicke h₂ um 52.4% größer ist als die kleinste Dicke h₁. Gleichfalls könnte natürlich auch die mittlere kleinste Dicke h₁ₘ ermittelt werden und damit das Verhältnis der Dicken berechnet werden, z.B. das Verhältnis der beiden mittleren Dicken. Vorzugsweise kann auch der kleinste Wert der verschiedenen Ermittlungsmethoden als Basis herangezogen werden.

Ebenso müssen die größten seitlichen Erstreckungen b₁, b₂ in der Fläche der Siegelfolie 10 kleiner sein als 500 µm, vorzugsweise kleiner als 400 µm und ganz besonders vorteilhaft kleiner als 250 µm, damit die Oberflächenstrukturen 14 mit dem freien Auge nicht sichtbar sind. Im Beispiel nach Fig.8 ist die größte seitliche Erstreckung b₁=108,6 µm. Ebenso könnte auch aus mehreren gemessenen größten seitlichen Erstreckungen ein Mittelwert gebildet werden, der dann kleiner als 500 µm sein muss. Für die seitlichen Erstreckungen sind Mikrotomschnitte in den Ebenen notwendig, in denen die größten Erstreckungen liegen, um die größten seitlichen Erstreckungen b₁, b₂ ermitteln zu können. Die größte seitliche Erstreckung kann aber einfacher auch aus einer mikroskopischen Draufsicht auf die Oberflächenstrukturen 14 der Siegelfolie 10 (wie in Fig.5 oder Fig.7) ermittelt werden.

Nachdem die Siegelfolie 10 gleichmäßig geprägt ist, reicht es an sich aus, einen kleinen geprägten Bereich der Siegelfolie 10, z.B. zwei oder drei nebeneinander liegende Oberflächenstrukturen 14, mittels Mikrotomschnitte zu untersuchen. Ein solcher Bereich wird als repräsentativ für die ganze Siegelfolie 10 mit Oberflächenstrukturen 14 angesehen.

Ebenso ist es denkbar, dass von der Siegelfolie 10 mehrere Mikrotomschnitte angefertigt werden und dass die Dicken oder die seitlichen Erstreckungen für jeden einzelnen Mikrotomschnitt wie oben beschrieben ermittelt werden. Daraus können dann Mittelwerte über alle Mikrotomschnitte berechnet werden, die dann als kleinste Dicke, größte Dicke und größte seitliche Erstreckung verwendet werden.

Die Begrenzung der größten seitlichen Erstreckung ist wichtig, um beim Siegeln keine Lufteinschlüsse und Undichtigkeiten zu erzielen und vor allem, um keine optisch störende, durch die Oberflächenstrukturen 14 verursachte Orangenhaut auf der meist hochglänzenden Sichtseite der Siegelfolie 10 zu erzeugen. Die Oberflächenstrukturen 14 sollen so klein sein, dass diese für das freie Auge keine störenden optischen Effekte verursachen.

Wenn die größte Dicke h₂ der Siegelfolie 10 um zumindest 10% größer ist, als die kleinste Dicke h₁ der Siegelfolie 10 (gegebenenfalls deren Mittelwerte) und die größte seitliche Erstreckung (b₁, b₂) der Oberflächenstrukturen 14 (gegebenenfalls deren Mittelwerte) kleiner als 500 µm ist, sind die Oberflächenstrukturen 14 bei der typischen Dicke der Siegelfolie 10 im Bereich von 10µm bis 100µm mit freiem Auge nicht sichtbar, sondern nur unter dem Mikroskop bzw. Vergrößerungsglas erkennbar. Die Oberflächenstrukturen 14 äußern sich für das freie Auge nur durch ein mattes, satiniertes Aussehen der geprägten Oberfläche der Siegelfolie 10.

Der Effekt der Oberflächenstrukturen 14 beim Siegeln liegt darin, dass die Siegelfolie 10 gegenüber einer herkömmlichen im Wesentlichen glatten Siegelfolie 10 eine erhöhte Kompressibilität aufweist, die es ermöglicht, allfällige auftretenden Dickenunterschiede beim Siegeln besser auszugleichen. Gleichzeitig kann dadurch die benötigte Materialmenge für die Siegelfolie 10 verringert werden, da die mittlere Dicke der Siegelfolie 10 mit Oberflächenstrukturen 14 in der Regel kleiner ist, als eine herkömmliche glatte Siegelfolie.

Durch die Oberflächenstrukturen 14 der Siegelfolie 10 kann aber gleichzeitig erreicht werden, dass, unabhängig von eventuell vorhandenem Antiblockadditiv, weniger Slipadditiv, oder sogar gar kein Slipadditiv, zugesetzt werden muss, um einen bestimmten vorteilhaften Reibungskoeffizienten (COF) der Siegelfolie 10 zu erzielen. Aufgrund der eingangs genannten negativen Eigenschaften der Slipadditive stellt das einen ganz besonderen Vorteil der Oberflächenstrukturen 14 dar. Hierbei wurde festgestellt, dass der S-Wert für die Siegelfolie 10 kleiner als 10.000, vorzugsweise kleiner als 5.000, sein sollte, um die damit verbundenen Nachteile zumindest ausreichend zu reduzieren. Ganz besonders vorteilhaft ist es aber, wenn die zugesetzte Menge an Slipadditiv Null ist, also in der Siegelfolie 10 überhaupt kein Slipadditiv enthalten ist. Zum Vergleich haben herkömmliche Siegelfolien aus PE, wie sie heute verwendet werden, S-Werte von typischerweise im Bereich von 20.000.

Zur Berechnung des S-Wertes einer mehrschichtigen Siegelfolie 10 mit Oberflächenstrukturen 14 werden die Schichtdicken D1, D2, D3 vor dem Einbringen der Oberflächenstrukturen 14 verwendet. Diese Schichtdicken D1, D2, D3 sind in der Regel bekannt. Falls die Schichtdicken D1, D2, D3 nicht bekannt sind, können diese auch aus den Materialeigenschaften der einzelnen Schichten ermittelt werden. Die Gesamtdicke D (in µm) einer Siegelfolie 10 vor dem Einbringen der Oberflächenstrukturen 14 kann einfach durch Division ihres gemessenen Flächengewichtes (normalerweise angegeben in g/m²) durch die aufgrund des Materials bekannte Dichte des Schichtmaterials (normalerweise angegeben in kg/dm³) ermittelt werden. Dabei ist natürlich eine gemäß dem Schichtaufbau der Siegelfolie 10 zu ermittelnde mittlere Dichte der einzelnen Schichten S1, S2, S3 zu verwenden. Die Dichten der Schichtmaterialen lassen sich beispielsweise aus Tabellen oder Datenblättern entnehmen oder werden vom Lieferanten zur Verfügung gestellt und können als bekannt vorausgesetzt werden. Typische Werte für die Dichte sind für LDPE 0,915 bis 0,935 kg/dm³, für LLDPE 0,90 bis 0,93 kg/dm³, für HDPE 0,94 bis 0,96 kg/dm³ und für PP 0,905 kg/dm³.

Falls auch das Schichtmaterial der einzelnen Schichten S1, S2, S3 nicht bekannt sein sollte, so kann auch das Schichtmaterial mit herkömmlicher Laboranalytik ermittelt werden, beispielsweise mittels der bekannten Fourier-Transformations-Infrarotspektrometrie (FTIR). Zusätzlich könnte noch der Schmelzpunkt des einzelnen Schichtmaterials mittels der bekannten dynamischen Differenzkalorimetrie (DSC) ermittelt werden, um das Schichtmaterial innerhalb einer Materialgruppe noch näher einzugrenzen. Beispielsweise ist die Dichte eines PE-Kunststoffes oftmals abhängig von der Schmelztemperatur (siehe die obigen Dichtebereiche).

Es ist ebenso möglich den Schichtaufbau der Siegelfolie 10 durch gängige Laboranalytik zu bestimmen, falls dieser nicht bekannt sein sollte. Hierzu eignet sich beispielsweise die oben beschriebene Mikrotomie (gegebenenfalls mit Hilfe von Lasermikroskopen). Aus einem Mikrotomschnitt kann die Schichtenverteilung (Schichtaufbau) in der Siegelschicht 10 bestimmt werden. Nachdem die Gesamtdicke D vor dem Einbringen der Oberflächenstrukturen 14 bekannt ist oder wie beschrieben ermittelt wurde, können mit der Schichtverteilung auch die Schichtdicken D1, D2, D3 der Einzelschichten S1, S2, S3 vor dem Einbringen der Oberflächenstrukturen 14 ermittelt werden.

Es ist folglich möglich, die Eigenschaften einer Siegelfolie 10, insbesondere Gesamtdicke D, Dicken D1, D2, D3 der einzelnen Schichten S1, S2, S3, Schichtenverteilung innerhalb der Siegelfolie 10, Schichtmaterialen der einzelnen Schichten S1, S2, S3, vor dem Einbringen der Oberflächenstrukturen 14, mit einem Fehler von <5%, in der Regel mit deutlich geringerem Fehler, ermittelt werden. Das ermöglicht auch die Untersuchung einer Siegelfolie 10 zu der keinerlei Angaben vorliegen.

Durch die Oberflächenstrukturen 14 kann somit, insbesondere auch unabhängig von einem eventuell in der Siegelfolie 10 vorhandenen Antiblockadditiv, trotzdem ein COF erreicht werden, der für die Verarbeitung der Siegelfolie 10, bzw. eines Folienlaminats mit Siegelfolie 10, benötigt wird. Insbesondere erreicht man damit, dass für die Erzielung der angestrebten COF-Bereiche trotz des niedrigen S-Wertes überhaupt kein Antiblockadditiv zugesetzt werden muss. Für andere Zwecke als das Erreichen des COF kann aber trotzdem ein Antiblockadditiv zugesetzt sein. Unabhängig von Antiblockadditiv bedeutet daher, dass der angestrebte COF mit der Siegelfolie 10 erreicht wird, egal ob und in welcher Konzentration ein Antiblockadditiv vorhanden ist.

Der angestrebte COF-Bereich der Siegelfolie 10 ist dabei gegenüber Stahl dynamisch kleiner 0,3, bevorzugt kleiner 0,27, und statisch kleiner 0,35, bevorzugt kleiner 0,3. Ganz besonders vorteilhaft ist ein COF-Bereich der Siegelfolie 10 gegenüber Stahl dynamisch kleiner 0,25, bevorzugt kleiner 0,22, und statisch kleiner 0,3, bevorzugt kleiner 0,25. Entscheidend für die Verarbeitbarkeit der Siegelfolie 10 ist der COF gegenüber Stahl. Der COF-Wert gegenüber sich selbst ist für die Verarbeitbarkeit der Siegelfolie 10 in der Praxis eher unwichtig, wird aber manchmal verwendet, um die Folien relativ zueinander vergleichen zu können.

Der Einfluss der Oberflächenstrukturen 14 auf den COF wird anhand der nachfolgenden Tabelle 1 erläutert.

**Tabelle 1**

| **Nr.** | **Material** | **Dicke** | **Prägung** | **Slipadditiv** | **COF Stahl stat./dyn.** | **COF Siegelfolie stat./dyn.** |
|---|---|---|---|---|---|---|
| 1 | LLDPE C8 | 70 µm | Nein | 500 ppm | 0,21 /0,18 | 0,32/0,25 |
| 2 | LLDPE C8 | 70 µm | Nein | Kein | Nicht messbar | Nicht messbar |
| 3 | 3-schichtige Folie | 70 µm | Nein | 350ppm in allen 3 Schichten | 0,22 / 0,19 | 0,34 /0,26 |
| | 1/1/1 mit | | | | | |
| | LLDPE C4/LLDPE C4/mLLDPE | | | | | |
| 4 | 3-schichtige Folie | 70 µm | Nein | 150ppm in allen 3 Schichten | 0,40 / 0,39 | 0,45 /0,46 |
| | 1/1/1 mit | | | | | |
| | LLDPE C4/LLDPE C4/mLLDPE | | | | | |
| 5 | 3-schichtige Folie | 60 g/m² | Pyramide diagonal, quadratische Grundfläche, Diagonale Pyramide 185 µm, seitliche Erstreckung b₁/b₂=130µm, h₁= 55µm, h₂= 85µm | Kein | 0,24 / 0,18 | 0,74 / 0,62 |
| | 1/1/1 mit | | | | | |
| | LLDPE C4/LLDPE C4/mLLDPE | | | | | |
| 6 | 3-schichtige Folie | 50 g/m² | Pyramide, hexagonale Grundfläche, seitliche Erstreckung b₁= 120 µm, h₁=40 µm, h₂=60 µm | Kein | 0,25 / 0,24 | 0,34 / 0,35 |
| | 1/5/1 mit | | | | | |
| | Mischung aus 80% LLDPE C4 und 20% LDPE in allen Schichten | | | | | |

Die Siegelfolie Nr. 1 ist eine herkömmliche einschichtige Siegelfolie aus LLDPE C8 mit einer Dicke von 70 µm mit keinen Oberflächenstrukturen 14 und mit ESA (Erucasäureamid) als Slipadditiv in einer Menge von 500ppm, was einen S-Wert von 35.000 ergibt. Durch den hohen S-Wert kann ein COF gegenüber Stahl und gegenüber sich selbst erreicht werden, wie er für die Verarbeitung der Siegelfolie günstig ist.

Das Vergleichsbeispiel in Form der einschichtigen Siegelfolie Nr. 2 demonstriert, den Einfluss des Slipadditivs auf den COF, wenn keine Oberflächenstrukturen 14 eingeprägt sind. Hier ist der COF mit der obigen Prüfvorschrift nicht mehr messbar. Der COF ist bei einer solchen Siegelfolie so hoch, dass der Prüfklotz beim Messen des COF springen würde, was eine Messung unmöglich macht. Das gilt natürlich auch für eine mehrschichtige Siegelfolie 10 ohne Oberflächenstrukturen 14 und ohne Slipadditiv.

Die Siegelfolie Nr. 3 ist eine dreischichtige, koextrudierte Siegelfolie 10 ohne Oberflächenstrukturen 14, wie in Fig.1. Die Siegelfolie Nr. 3 hat eine Schichtverteilung 1/1/1, d.h. alle drei Schichten S1, S2, S3 haben die gleiche Dicke D1, D2, D3, in diesem Fall mit einer Gesamtdicke D=70µm der Siegelfolie 10 eine Dicke D1, D2 bzw. D3 von 70µm/3 = 23,33µm. Als Material der drei Schichten sind LLDPE C4 / LLDPE C4 / mLLDPE (Metallocene LLDPE) vorgesehen (C4 bezeichnet dabei in bekannter Weise das Comonomer, in diesem Fall Buten C4). Die äußerste Schicht der Siegelfolie, deren COF gegen Stahl geprüft wird, ist dabei die mLLDPE Schicht. Allen drei Schichten S1, S2, S3 der Siegelfolie 10 ist ein Slipadditiv mit einer Konzentration von 350ppm zugesetzt. Der auf die Schichtdicken der einzelnen Schichten gewichtete Mittelwert der Slipadditivkonzentration ist folglich 350ppm. Der S-Wert der dreischichtigen Siegelfolie Nr. 3 ist somit 24.500. Aufgrund des hohen S-Wertes wird der angestrebte Bereich des COF gegenüber Stahl erreicht.

Geht man mit dem S-Wert nach unten, so erhöht sich der COF, wie anhand der Siegelfolie Nr.4 demonstriert wird. Bei einer Slipadditivkonzentration von 150ppm in allen drei Schichten ergibt sich ein S-Wert von 10.500 und die COF-Werte liegen weit außerhalb des angestrebten Bereichs. Wird die Slipadditivkonzentration weiter verringert, so erhöhen sich die COF-Werte noch weiter. Eine Reduzierung der Slipadditivkonzentration ist daher in der Praxis nicht sinnvoll, bzw. muss mit hohen bzw. mit höheren Konzentrationen von Antiblockadditiv ausgeglichen werden.

Die Siegelfolie Nr. 5 ist eine erfindungsgemäße dreischichtige, koextrudierte Siegelfolie 10 mit Oberflächenstrukturen 14, z.B. wie in Fig.11 dargestellt, mit einer Schichtverteilung 1/1/1 vor dem Einbringen der Oberflächenstrukturen 14, d.h. alle drei Schichten S1, S2, S3 haben vor dem Einbringen der Oberflächenstrukturen 14 die gleiche Dicke D1, D2, D3. Als Material der drei Schichten S1, S2, S3 sind LLDPE C4 / LLDPE C4 / mLLDPE (Metallocene LLDPE) vorgesehen. Die Oberflächenstrukturen 14 sind hier als aus der Ebene herausstehende Pyramiden mit quadratischer Grundfläche (Diagonale von 185 µm) mit einer Seitenlänge von 130µm ausgeführt. Die Pyramiden sind dabei diagonal zur Längsrichtung der Siegelfolie 10 aufgebracht (wie in Fig.5). Das Flächengewicht der Siegelfolie Nr. 5 beträgt 60g/m². Dieses Flächengewicht der Siegelfolie kann mit dem bekannten Schichtaufbau 1/1/1 und den bekannten Materialen einfach auf die Flächengewichte der einzelnen Schichten S1, S2, S3 umgerechnet werden. Mit den Flächengewichten der einzelnen Schichten S1, S2, S3 und den bekannten Dichten, können dann die Schichtdicken D1, D2, D3 ermittelt werden. Die Gesamtdicke ergibt sich dann aus der Summe der Schichtdicken D1, D2, D3 der Schichten S1, S2, S3. Dieses Vorgehen ergibt für die Siegelfolie Nr. 5 eine Gesamtdicke D von ca. 65,5µm vor dem Einbringen der Oberflächenstrukturen 14. In die Siegelfolie Nr. 5 ist kein Slipadditiv zugesetzt, was einen S-Wert von 0 ergibt. Ebenso ist kein Antiblockadditiv zugesetzt. Hier erkennt man, dass der COF gegenüber Stahl durch die Oberflächenstrukturen 14 im gewünschten Bereich fällt, obwohl überhaupt keine Slipadditive zugesetzt sind.

Das ist umso bemerkenswerter, da die äußere Schicht, in die die Oberflächenstrukturen 14 eingebracht werden, die sehr klebrige mLLDPE-Schicht ist. mLLDPE wird in der industriellen Anwendung oft auch als selbstklebende Oberflächenschutzfolie eingesetzt. Eine mLLDPE Schicht würde ohne Zusatzmaßnahmen auf Stahl haften bleiben und der COF wäre überhaupt nicht messbar. Durch die Oberflächenstrukturen 14 erreicht man ohne Zugabe eines Slipadditivs selbst bei diesem klebrigen Material gegenüber Stahl einen COF im angestrebten Bereich. Würde ein Slipadditiv bis zu einem S-Wert von kleiner 10.000 zugesetzt, so könnte der COF, insbesondere gegenüber sich selbst, ebenfalls noch weiter reduziert werden.

Die Siegelfolie Nr. 6 mit einem Flächengewicht von 50 g/m² hat eine Schichtverteilung von 1/5/1, wobei jede Schicht 1/5/1 aus einer Mischung aus 80% LLDPE C4 und 20% LDPE besteht. Die mittlere Schicht war zusätzlich weiß eingefärbt, was allerdings keinerlei Auswirkung auf die erfindungsgemäße Wirkung hat. Das ergibt eine Gesamtdicke D der Siegelfolie Nr. 6 vor dem Einbringen der Oberflächenstrukturen 14 von 51 µm. Die Oberflächenstrukturen 14 der Siegelfolie Nr. 6 sind als abstehende Pyramiden mit einer hexagonalen Grundfläche und einer Breite b₁ von 120 µm (siehe Fig.7) ausgeführt, wobei die Pyramiden diagonal zur Längsrichtung der Siegelfolie ausgerichtet sind (wie in Fig.7). Mit solchen Oberflächenstrukturen 14 erreicht man auch einen COF der Siegelfolie 10 gegen sich selbst, der im bevorzugten Bereich liegt. Eine hexagonale Oberflächenstrukturen 14 kann daher als besonders vorteilhaft angesehen werden. Anstelle von Hexagonen können auch, vorzugsweise regelmäßige, Vielecke mit mehr als sechs Seitenflächen als Grundfläche verwendet werden. Der Grund für die niedrigeren COF Werte gegen sich selbst wird darin gesehen, dass solche Strukturen besser aneinander abgleiten können und sich nicht so leicht ineinander verzahnen können. Eine ähnliche Wirkung kann man auch mit versenkten Oberflächenstrukturen 14 wie in Fig.5 und 6 dargestellt erzielen.

Nachfolgend noch einige Ausführungen zur Berechnung des S-Wertes in einer mehrsichtigen Folie. Wie oben erwähnt wird der S-Wert berechnet, indem der S-Wert jeder einzelnen Schicht (Gehalt an Slipadditiv in der Schicht x Dicke der einzelnen Schicht) berechnet wird und die S-Werte der einzelnen Schichten zum S-Wert der Folie addiert werden. Das ist gleichwertig zur Ermittlung eines auf die Schichtdicken gewichteten, mittleren Gehalts an Slipadditiv in ppm der Folie (Mittelwert über alle Schichten) und Multiplikation mit der Gesamtdicke der Folie. Bei einer Folie mit einem 1/3/1 Schichtaufbau und 100ppm Slipadditiv in den äußeren Schichten S1, S3 und 200ppm in der mittleren Schicht S2 käme man auf einen auf die Schichtdicken D1, D2, D3 gewichteten, mittleren Gehalts an Slipadditiv von 160ppm ((100ppm + 3x200ppm + 100ppm)/5). Nachdem die Siegelfolie 10 erfindungsgemäß aber mit Oberflächenstrukturen 14 versehen wird, und die Schichten durch die Oberflächenstrukturen 14 deformiert werden (siehe Fig.8 und 11), wird im Sinne der Erfindung die Gesamtdicke D vor dem Einbringen der Oberflächenstrukturen 14 zur Berechnung des S-Wertes herangezogen. Wäre die Gesamtdicke D der mehrschichtigen Siegelfolie vor dem Einbringen der Oberflächenstrukturen 14 60µm, würde das einen S-Wert der Siegelfolie von 60^{∗}160 = 9.600 ergeben. Auf den gleichen S-Wert kommt man, wenn man die einzelnen S-Werte der Schichten addiert, also 2^{∗}60/5^{∗}100 + 60/5^{∗}3^{∗}200 = 9.600.

Die erfindungsgemäße Siegelfolie 10 wird vorzugsweise in einem Folienlaminat 16, bestehend aus einer, üblicherweise bedruckten, Basisschicht 12 aus Aluminium, Papier oder Kunststoff und einer siegelfähigen Siegelschicht 11 aus der Siegelfolie 10, z.B. wie in Fig.9 dargestellt, verwendet. Dazu ist die der ersten Seite 15 der Siegelfolie 10 mit den Oberflächenstrukturen 14 abgewandte zweite Seite 17 der Siegelfolie 10 mit einer Trägerschicht 18 zum Folienlaminat 16 verbunden. Die Siegelschicht 11 bildet natürlich eine der äußeren Seiten des Folienlaminats 16. Die Trägerschicht 18 kann einschichtig, beispielsweise in Form einer Basisschicht 12, oder mehrschichtig, beispielsweise als Verbund aus einer Basisschicht 12 und einer Barriereschicht 13 oder anderer Schichten, sein. Als Basisschicht 12 kann Papier, Aluminium oder ein Kunststoff verwendet werden. Die Barriereschicht 13 ist z.B. eine Aluminiumfolie oder eine metallisierte Folie. Die einzelnen Schichten des Folienlaminats 16 sind jeweils z.B. mittels je einer nicht dargestellten Klebeschicht durch Kaschieren miteinander verbunden.

Gleichfalls ist es denkbar, die mehrschichtige Siegelfolie 10 direkt auf die Trägerschicht 18 aufzuextrudieren. Dazu werden die einzelnen Schichten S1, S2, S3 der mehrschichtigen Siegelfolie 10 in einer Extrusionsanlage auf die Trägerschicht 18 als Schmelzefilm koextrudiert bzw. extrusionsbeschichtet.

Das in die Siegelfolie 10 zugesetzte Slipadditiv kann im Folienlaminat 16 auch in die Trägerschicht 18, oder in einzelne Schichten der Trägerschicht 18, migrieren. Das ist zu berücksichtigen, wenn ein Folienlaminat 16 analysiert wird, um die Eigenschaften der Siegelfolie 10 zu bestimmen. Dabei kann davon ausgegangen werden, dass in einer Klebeschicht und in der Trägerschicht 18 vor dem Verbinden mit der Siegelfolie 10 kein oder nur sehr wenig Slipadditiv vorhanden war. Abgesehen davon ist die Trägerschicht 18, bzw. die Barriereschicht 13, meistens deutlich dünner als die Siegelschicht 11, sodass ein darin enthaltenes Slipadditiv normalerweise nicht oder kaum ins Gewicht fällt. Man kann daher davon ausgehen, dass ein in der Kleberschicht oder in der Trägerschicht 18 durch chemische Analyse festgestelltes Slipadditiv aus der Siegelschicht 11 stammt. Das kann dann bei der Analyse der Siegelfolie 10 der Siegelschicht 11 eines Folienlaminats 16 berücksichtigt werden, um den S-Wert der Siegelfolie 10 korrekt zu bestimmen.

Die erfindungsgemäße sehr geringe Menge an Slipadditiv in der mehrschichtigen Siegelfolie 10 ist aufgrund der Migration der Slipadditive auch im Folienlaminat 16 vorteilhaft. S-Werte von größer 10.000 in der Siegelfolie 10, wie bisher üblich oder notwendig, sind kontraproduktiv, da dann mit einer Migration der Slipadditive aus der Siegelschicht 11 in die andere Außenseite des Folienlaminats 16 zu rechnen ist. Das kann wiederum die eingangs beschriebenen Transportprobleme des Folienlaminats 16 in einer Abpackanlage auslösen. Die erfindungsgemäße mehrschichtige Siegelfolie 10 verbessert daher auch die Verarbeitbarkeit eines Folienlaminats 16 mit einer Siegelschicht 11 aus einer solchen Siegelfolie 10.

Für die Anwendung des Folienlaminats 16 als Verpackung ist die Schichtdicke der Basisschicht 12 typischerweise im Bereich von 8µm bis 100 µm, beispielsweise 8 µm bis 40 µm bei BOPET oder 15 µm bis 40 µm bei Aluminium, 10µm bis 50 µm bei BOPP und bis zu 100 µm bei Papier. Derzeit sind auch BOPP oder BOPET-Schichten von nur 3-4 µm in der Erprobung. Die Dicke der Siegelschicht 11 (Dicke D vor dem Einbringen der Oberflächenstrukturen 14) liegt typischerweise im Bereich von 10µm bis 100µm, vorzugsweise im Bereich von 10 µm bis 80 µm und ganz besonders vorteilhaft im Bereich von 20 µm bis 70 µm, und die Schichtdicke der Barriereschicht 13 typischerweise im Bereich von 6µm bis 25 µm bei Aluminium oder analog der oben genannten Dicken für die Basisschicht 12 bei metallisierten Polymerfolien. Es ist aber auch denkbar, dass die Barriereschicht 13 in der Siegelschicht 11 eingearbeitet ist, z.B. in Form einer PE-EVOH Folie (Polyethylen-Ethylen-Vinylalkohol-Copolymer-Folie), womit eine eigene Barriereschicht 13 entfallen kann. Die Schichtdicken allfälliger dazwischen angeordneter Klebeschichten liegt typischerweise im Bereich von 1µm bis 5µm. Die Trägerschicht 18 kann aber auch noch andere Schichten enthalten. Ebenso kann vorgesehen sein, die Trägerschicht 18 an der sichtbaren Seite zu bedrucken. Im Falle einer transparenten Basisschicht 12 in der Trägerschicht 18 kann auch die an die Basisschicht 12 angrenzende Schicht bedruckt sein.

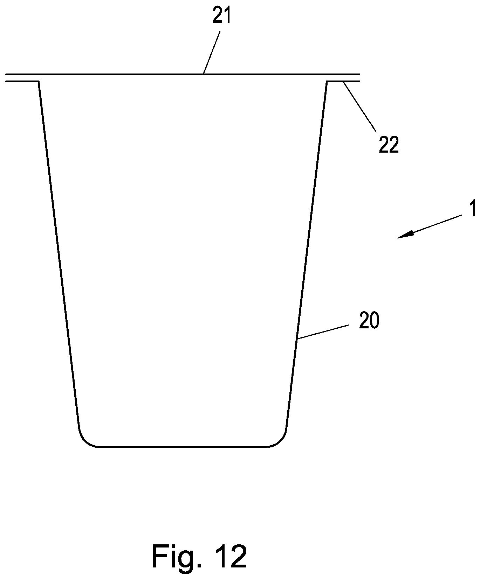

Ein solches Folienlaminat 16 wird für die Herstellung von Verpackungen für Lebensmittel, Tierfutter oder Hygieneartikel verwendet, z.B. in Form von Beuteln 1 (Fig.1) oder als membranartige Verschlüsse (Platine 21) von Behältern (Fig.12). Beispielsweise wird das Folienlaminat 16 zur gewünschten Verpackung gefaltet und entlang von Siegelnähten gesiegelt, wie z.B. in Fig.1 anhand eines Beutels 1 dargestellt. Das Folienlaminat 16 kann auch in geeigneter Form ausgestanzt werden und als Platine 21 zum Verschluss eines Behälters 20 dienen, wie in Fig.12 dargestellt. Dazu wird die Platine 21 auf einem umlaufenden Rand 22 des Behälters 20 aufgesiegelt. Hierzu sind zur Herstellung solcher Verpackung jeweils kommerziell erhältliche Verpackungsmaschinen verfügbar, die das leisten, weshalb hier nicht näher auf den Vorgang der Herstellung solcher Verpackungen eingegangen wird. Die Siegelschicht 11 des Folienlaminats 10 weist zumindest an den Stellen, an denen gesiegelt wird die oben beschriebenen Oberflächenstrukturen 14 auf, wodurch durch den damit erreichten COF die günstige Verarbeitbarkeit des Folienlaminats 16 in der jeweiligen Verpackungsmaschine sichergestellt ist.

Bei vielen Anwendungen, wie FFS-Maschinen, ist darauf zu achten, dass der überwiegende Flächenanteil erfindungsgemäß mit den Oberflächenstrukturen 14 versehen ist, da ansonsten das problemlose Gleiten gegenüber den Stahloberflächen der Maschine nicht gegeben ist.

Einzelne ungeprägte Bereiche, z.B. zur Gestaltung von Kundenlogos, sind aber an der Siegelschicht 11, und damit an der Siegelfolie 10, machbar, solange diese nicht im Siegelbereich sind. Auch bei komplett durchgängigen Oberflächenstrukturen 14 lassen sich durch Variation der Oberflächenstrukturen 14 und dadurch durch die Variation des Glanzgrades nach dem Einbringen der Oberflächenstrukturen 14 solche Designmerkmale herstellen. Diese könnten dann auch im Siegelbereich liegen, ohne störend zu wirken.

Durch die Oberflächenstrukturen 14 ergibt sich aber auch eine verbesserte Kompressibilität des Folienlaminats 16, wodurch der Siegelvorgang auch an Überlappungsstellen mehrerer Siegelnähte 2, 3 (wie in Fig.1 beispielhaft beschrieben) unterstützt wird. Auch fertigungstechnisch bedingte Dickenunterschiede im Siegelbereich, können so ausgeglichen werden. Dadurch können beim Siegeln zwischen Siegelbacken 9a, 9b aneinander liegende und zusammengepresste Folienlaminate 16 besser komprimiert werden, wodurch die Ausbildung von Luftkanälen 4 im Überlappungsbereich bzw. von Undichtheiten im Siegelbereich zumindest reduziert, idealerweise verhindert werden kann. Gleichzeitig wird durch das erfindungsgemäße Folienlaminat 16 sichergestellt, dass die Optik der Verpackung, insbesondere auf der Sichtseite der Verpackung, nicht verschlechtert wird, da die Oberflächenstrukturen 14 ausreichend klein sind, um mit dem freien Auge nicht störend wahrgenommen zu werden. Aufgrund der kleinen Dimensionen der Oberflächenstrukturen 14 der Siegelschicht 11 (insbesondere der Dicken) drücken sich diese auch nicht auf die Sichtseite des Folienlaminats 16, also die Außenseite der Verpackung, durch.

Da solche geprägten Siegelfolien 10 der Siegelschicht 11 aus z.B. PE auch durch Flachfolienextrusion herstellbar sind, was derzeit nur für glatte Folien aus PP der Fall ist, können auch PE-Rohstoffe mit höherem MFI (Melt Flow Index) eingesetzt werden. Durch die bessere Fließfähigkeit des Folienmaterials 16 kann das Schließen der Luftkanäle beim Siegeln bzw. das Verhindern von Undichtheiten an der Siegelnaht zusätzlich unterstützt werden. Der Effekt der erfindungsgemäßen mehrschichtigen Siegelfolie 10 in einem Folienlaminat 16 beim Siegeln wird anhand eines Beispiels in Form von Beuteln 1 erläutert. Hierzu wurden mit einer kommerziell erhältlichen Verpackungsmaschine, hier eine sogenannte Vertical Form Fill Seal Machine (vertical FFS), mit einem Folienlaminat A und einem Folienlaminat B Beutel, wie in Fig.1 dargestellt, erzeugt und anschließend die Dichtheit der derart hergestellten Beutel geprüft. Dabei wurde die Siegeltemperatur T_{Q} der Siegelung der Quernaht 3 und die Siegelzeit tₛ variiert, um für jede Siegeltemperatur T_{Q} die minimale Siegelzeit tₛ für die höchste Produktivität, als Anzahl A der produzierten Beutel pro Minute, zu ermitteln. Die Siegelzeit tₛ beeinflusst die Zykluszeit t_{z}, also die Zeit, die für die Herstellung eines Beutels benötigt wird. Die Siegeltemperatur für die Längsnaht 2 wurde dabei gleich bei 160°C belassen. Es wurden für jeden Parametersatz jeweils 30 Packungen hergestellt und auf Dichtheit geprüft. Die Prüfung auf Dichtheit erfolgte in einem Wasserbad bei einem Unterdruck von 650 mbar. Dabei sind die Beutel unter Wasser und die Luft oberhalb des Wassers wird auf den Unterdruck evakuiert. Dadurch bläht sich die in den Beuteln eingeschlossene Restluft auf und bringt im Schadensfall die Siegelnaht zum Versagen, was anhand entstehender Luftblasen im Wasser sichtbar ist.

Als Folienlaminat A wird ein herkömmliches Laminat mit einer Basisschicht 12 aus BOPET mit einer Schichtdicke von 12 µm und einer damit verklebten Siegelschicht 11 aus einer mehrschichtigen Siegelfolie 10 gemäß der Siegelfolie Nr.3 in Tabelle 1 verwendet.

Als Folienlaminat B wird ein Laminat mit einer Basisschicht 12 aus BOPET mit einer Schichtdicke von 12 µm und einer damit verklebten erfindungsgemäßen mehrschichtigen Siegelfolie gemäß der Siegelfolie Nr.6 in Tabelle 1 verwendet. Diese Siegelschicht 11 hat aufgrund der Oberflächenstrukturen 14 auch ohne jegliche Slipadditive wie ESA und ohne Antiblockadditive einen COF gegen Stahl (statisch/dynamisch) von 0,25 / 0,24. Damit liegt das erfindungsgemäße Folienlaminat B mit dem COF im für die Weiterverarbeitung solcher Folien auf gängigen Verpackungsmaschinen gewünschten Bereich. Auch während der folgenden Versuche bei der Verarbeitung auf einer Verpackungsmaschine in Form einer vertikalen Form-Fill-Seal (vFFS) Anlage wurden als Bestätigung keine diesbezüglichen Probleme in der Verarbeitung beobachtet.

Das Ergebnis dieser Versuche ist in Tabelle 2 dargestellt.

**Tabelle 2**

| | | | | **Folienlaminat A (Vergleich)** | **Folienlaminat B (Erfindung)** |
|---|---|---|---|---|---|
| **tₛ [s]** | **t_{z} [s]** | **A** | **t_{Q} [°C]** | **Dichte Pack** | **Dichte Pack** |
| 0,30 | 0,55 | 109 | 150°C | 60% | 83% |
| 0,25 | 0,5 | 120 | 160°C | 90% | 97% |
| 0,20 | 0,45 | 133 | 165°C | 23% | 97% |
| 0,25 | 0,5 | 120 | 165°C | 100% | 100% |
| 0,20 | 0,45 | 133 | 170°C | 23% | 97% |

Wie der Tabelle 2 zu entnehmen ist, kann die Siegelzeit tₛ mit einem erfindungsgemäßen Folienlaminat B verkürzt werden, was sich unmittelbar auch auf die Anzahl A der pro Minute herstellbaren Beutel niederschlägt. Dies wird mit einem preiswerten Rohstoff (LLDPE C4) und einer geringeren Materialmenge erreicht. Dies ist umso bemerkenswerter, als die Folienrezeptur der Siegelschicht 11 noch in keiner Weise optimiert wurde. Der Effekt kommt nur durch die verbesserte Kompressibilität durch die Oberflächenstrukturen 14 in der Siegelschicht 11 zu Stande.

Insbesondere bei Verwendung des Folienlaminats 16 zur Herstellung von Beuteln ergibt sich auch der Vorteil, dass die Oberflächenstrukturen 14 dem Füllgut zugewandt angeordnet sind. Durch die Oberflächenstrukturen 14 kann somit z.B. auch eine Anhaftung von Füllgut verringert bzw. zu vermieden werden, oder die Entleerung des Beutels verbessert werden.

## Patentansprüche

1. Mehrschichtige Siegelfolie aus einem siegelfähigen Polymer, wobei auf einer ersten Seite (15) der Siegelfolie (10) zumindest teilweise Oberflächenstrukturen (14) zur Erhöhung der Kompressibilität der Siegelfolie (10) im Bereich der Oberflächenstrukturen (14) eingearbeitet sind und die Siegelfolie (10) eine Dicke (D) vor dem Einbringen der Oberflächenstrukturen (14) im Bereich von 10µm bis 100µm, vorzugsweise 10 µm bis 80 µm und ganz besonders vorzugsweise im Bereich von 20 µm bis 70 µm, aufweist und wobei der Siegelfolie (10) ein Slipadditiv in einer maximalen Menge zugesetzt ist, die einen S-Wert von kleiner 10.000, vorzugsweise kleiner 5.000, ergibt, um unabhängig von einer Zugabe von einem Antiblockadditiv in die Siegelfolie (10) mit der Seite (15) mit den Oberflächenstrukturen (14) einen COF gegenüber Stahl von dynamisch kleiner 0,3, bevorzugt kleiner 0,27, und statisch kleiner 0,35, bevorzugt kleiner 0,3, zu erreichen.

2. Mehrschichtige Siegelfolie nach Anspruch 1, **dadurch gekennzeichnet, dass** durch die Oberflächenstrukturen (14) die größte Dicke (h₂) der Siegelfolie (10) um zumindest 10% größer ist, als die kleinste Dicke (h₁) der Siegelfolie (10) und die größte seitliche Erstreckung (b₁, b₂) der Oberflächenstrukturen (14) kleiner als 500 µm, vorzugsweise kleiner als 400 µm, vorzugsweise kleiner als 250 µm, ist.

3. Mehrschichtige Siegelfolie nach Anspruch 1 oder 2, **dadurch gekennzeichnet, dass** die Siegelfolie (10) ohne Zugabe von Slipadditiv gefertigt ist.

4. Mehrschichtige Siegelfolie nach Anspruch 2 oder 3, **dadurch gekennzeichnet, dass** die größte Dicke (h₂) der Siegelfolie (10) um maximal 300% größer ist, als die kleinste Dicke (h₁) der Siegelfolie (10).

5. Mehrschichtige Siegelfolie nach einem dem Ansprüche 1 bis 4, **dadurch gekennzeichnet, dass** die Oberflächenstrukturen (14) diagonal zur Längsrichtung der Siegelfolie (10) ausgerichtet sind.

6. Mehrschichtige Siegelfolie nach einem dem Ansprüche 1 bis 5, **dadurch gekennzeichnet, dass** die Oberflächenstrukturen (14) aus der ersten Seite (15) der Siegelfolie (10) herausragend ausgebildet sind oder die Oberflächenstrukturen (14) als Vertiefungen an der ersten Seite (15) der Siegelfolie (15) ausgebildet sind.

7. Mehrschichtige Siegelfolie nach einem dem Ansprüche 1 bis 6, **dadurch gekennzeichnet, dass** die Oberflächenstrukturen (14) mit einer Grundfläche in Form eines Vielecks mit zumindest sechs Seiten ausgebildet sind.

8. Mehrschichtige Siegelfolie nach einem der Ansprüche 1 bis 7, **dadurch gekennzeichnet, dass** in der Siegelfolie (10) an der Seite mit den Oberflächenstrukturen (14) Bereiche ohne Oberflächenstrukturen (14) oder unterschiedliche Oberflächenstrukturen (14), insbesondere in Form eines Logos oder einer Aufschrift, vorgesehen sind.

9. Mehrschichtige Siegelfolie nach einem dem Ansprüche 1 bis 8, **dadurch gekennzeichnet, dass** die Siegelfolie (10) eine im Blasfolien- oder Flachfolienextrusionsverfahren hergestellte Polyethylen-Folie ist.

10. Mehrschichtige Siegelfolie nach einem dem Ansprüche 1 bis 9, **dadurch gekennzeichnet, dass** die Siegelfolie (10) frei von Antiblockadditiven ist.

11. Folienlaminat aus einer Trägerschicht (18) und einer eine mehrschichtigen Siegelschicht (11) ausbildenden Siegelfolie (10) nach einem der Ansprüche 1 bis 10, wobei auf der ersten Seite der Siegelfolie (10) die Oberflächenstrukturen (14) ausgebildet sind und die gegenüberliegende zweite Seite der Siegelfolie (10) mit der Trägerschicht (18) verbunden ist.

12. Folienlaminat nach Anspruch 11, **dadurch gekennzeichnet, dass** die Trägerschicht (18) und die Siegelschicht (11) durch eine Klebeschicht miteinander verbunden sind oder die Siegelschicht (11) auf die Trägerschicht (18) aufextrudiert ist.

13. Folienlaminat nach Anspruch 11 oder 12, **dadurch gekennzeichnet, dass** die Trägerschicht (18) eine Basisschicht (12) umfasst.

14. Folienlaminat nach Anspruch 11 oder 12, **dadurch gekennzeichnet, dass** die Trägerschicht (18) eine Basisschicht (12) und eine Barriereschicht (13) umfasst, wobei die Barriereschicht zwischen Basisschicht (12) und der Siegelschicht (11) angeordnet ist.

15. Verpackung hergestellt aus einem Folienlaminat (16) nach einem der Ansprüche 11 bis 14, wobei die Verpackung (1) durch Falten und Siegeln des Folienlaminats (16) hergestellt ist oder die Verpackung (1) als Behälter (20) mit einem umlaufenden Rand (22), auf dem eine aus dem Folienlaminat (10) hergestellte Platine (21) aufgesiegelt ist, ausgeführt ist.

16. Verpackung nach Anspruch 15, **dadurch gekennzeichnet, dass** durch das Falten und Siegeln überlappende Siegelnähte (2, 3) entstehen, **dass** an der Siegelfolie (10) zumindest an den Stellen an denen gesiegelt wird Oberflächenstrukturen (14) eingearbeitet sind **und dass** beim Siegeln aneinander liegende Folienlaminate (16) mit der Siegelfolie (10), insbesondere im Überlappungsbereich mehrerer Siegelnähte (2, 3), zusammengepresst und komprimiert werden, um die Ausbildung von Luftkanälen (4) im Überlappungsbereich zu vermeiden.

## Claims

1. A multilayer sealing film consisting of a sealable polymer, wherein, surface structures (14) are provided on a first side (15) of the sealing film (10) at least in part, in order to increase the compressibility of the sealing film (10) in the region of the surface structures (14), and the sealing film (10) has a thickness (D) prior to the introduction of the surface structures (14) in the range of 10 µm to 100 µm, preferably 10 µm to 80 µm and very particularly preferably in the range of from 20 µm to 70 µm, and wherein a slip additive is added to the sealing film (10) in a maximum quantity that results in an S-value of less than 10,000, preferably less than 5,000, in order to achieve a COF relative to steel of dynamically less than 0.3, preferably less than 0.27, and statically less than 0.35, preferably less than 0.3, with the side (15) comprising the surface structures (14), irrespective of an addition of an antiblock additive to the sealing film (10).

2. The multilayer sealing film according to claim 1, **characterized in that,** as a result of the surface structures (14), the greatest thickness (h₂) of the sealing film (10) is at least 10% greater than the smallest thickness (h₁) of the sealing film (10), and the greatest lateral extension (bi, b₂) of the surface structures (14) is less than 500 µm.

3. The multilayer sealing film according to either claim 1 or claim 2, **characterized in that** the sealing film (10) is manufactured without adding a slip additive.

4. The multilayer sealing film according to either claim 2 or claim 3, **characterized in that** the greatest thickness (h₂) of the sealing film (10) is at most 300% greater than the smallest thickness (h₁) of the sealing film (10).

5. The multilayer sealing film according to any of claims 1 to 4, **characterized in that** the surface structures (14) are oriented so as to be diagonal to the longitudinal direction of the sealing film (10).

6. The multilayer sealing film according to any of claims 1 to 5, **characterized in that** the surface structures (14) are formed so as to protrude from the first side (15) of the sealing film (10) or **in that** the surface structures (14) are formed as depressions on the first side (15) of the sealing film (15).

7. The multilayer sealing film according to any of claims 1 to 6, **characterized in that** the surface structures (14) are formed having a base surface in the shape of a polygon comprising at least six sides.

8. The multilayer sealing film according to any of claims 1 to 7, **characterized in that** regions without surface structures (14) or having different surface structures (14), in particular in the form of a logo or inscription, are provided in the sealing film (10), on the side comprising the surface structures (14).

9. The multilayer sealing film according to any of claims 1 to 8, **characterized in that** the sealing film (10) is a polyethylene film produced in the blown film extrusion or flat film extrusion method.

10. The multilayer sealing film according to any of claims 1 to 9, **characterized in that** the sealing film (10) is free of antiblock additives.

11. A film laminate consisting of a substrate layer (18) and a sealing film (10) according to any of claims 1 to 12 that forms a multilayer sealing layer (11), wherein the surface structures (14) are formed on the first side of the sealing film (10) and the opposing second side of the sealing film (10) is bonded to the substrate layer (18).

12. The film laminate according to claim 11, **characterized in that** the substrate layer (18) and the sealing layer (11) are bonded to one another by means of an adhesive layer or **in that** the sealing layer (11) is extruded onto the substrate layer (18).

13. The film laminate according to claim 11 or 12, **characterized in that** the substrate layer (18) comprises a base layer (12).

14. The film laminate according to claim 11 or 12, **characterized in that** the substrate layer (18) comprises a base layer (12) and a barrier layer (13), the barrier layer being arranged between the base layer (12) and the sealing layer (11).

15. A packaging produced from a film laminate (16) according to any of claims 11 to 14, wherein the packaging (1) is produced by folding and sealing the film laminate (16) or wherein the packaging (1) is formed as a container (20) comprising a peripheral edge (22) onto which a lid (21) produced from the film laminate (10) is sealed.

16. The packaging according to claim 15, **characterized in that** the folding and sealing results in overlapping sealed seams (2, 3), **in that** surface structures (14) are formed on the sealing film (10) at least at regions at which sealing takes place, **and in that,** upon sealing, adjacent film laminates (16) comprising the sealing film (10) are pressed together and compressed, in particular in the overlap region of a plurality of sealed seams (2, 3), in order to prevent the formation of air channels (4) in the overlap region.

## Revendications

1. Feuille de scellement multicouche constituée d'un polymère scellable, des structures de surface (14) destinées à augmenter la compressibilité de la feuille de scellement (10) étant au moins partiellement incorporées sur une première face (15) de la feuille de scellement (10) dans la zone des structures de surface (14), et la feuille de scellement (10) ayant une épaisseur (D), avant l'introduction des structures de surface (14), comprise dans la plage de 10 à 100 µm, de préférence de 10 à 80 µm et mieux encore dans la plage de 20 à 70 µm, et un agent glissant étant ajouté à la feuille de scellement (10) en une quantité maximale qui aboutit à une valeur S inférieure à 10 000, de préférence inférieure à 5 000 de manière à atteindre un coefficient de friction, par rapport à l'acier, dynamiquement inférieur à 0,3, de préférence inférieur à 0,27, et statiquement inférieur à 0,35, de préférence inférieur à 0,3 indépendamment d'un ajout d'un additif anti-adhérent dans la feuille de scellement (10) comportant la face (15) présentant les structures de surface (14).

2. Feuille de scellement multicouche selon la revendication 1, **caractérisée en ce que,** en raison des structures de surface (14), la plus grande épaisseur (h₂) de la feuille de scellement (10) est supérieure d'au moins 10 % à la plus petite épaisseur (h₁) de la feuille de scellement (10) et la plus grande extension latérale (bi, b₂) des structures de surface (14) est inférieure à 500 µm, de préférence inférieure à 400 µm, de préférence inférieure à 250 µm.

3. Feuille de scellement multicouche selon la revendication 1 ou 2, **caractérisée en ce que** la feuille de scellement (10) est réalisée sans ajout d'agent glissant.

4. Feuille de scellement multicouche selon la revendication 2 ou 3, **caractérisée en ce que** la plus grande épaisseur (h₂) de la feuille de scellement (10) dépasse la plus petite épaisseur (h₁) de la feuille de scellement (10) de 300 % au maximum.

5. Feuille de scellement multicouche selon l'une des revendications 1 à 4, **caractérisée en ce que** les structures de surface (14) sont orientées en diagonale par rapport à la direction longitudinale de la feuille de scellement (10).

6. Feuille de scellement multicouche selon les revendications 1 à 5, **caractérisée en ce que** les structures de surface (14) sont réalisées en saillie par rapport à la première face (15) de la feuille de scellement (10), ou **en ce que** les structures de surface (14) sont réalisées sous forme d'évidements sur la première face (15) de la feuille de scellement (15).

7. Feuille de scellement multicouche selon l'une des revendications 1 à 6, **caractérisée en ce que** les structures de surface (14) sont réalisées avec une base en forme de polygone à au moins six côtés.

8. Feuille de scellement multicouche selon l'une des revendications 1 à 7, **caractérisée en ce que,** dans la feuille de scellement (10) sur la face des structures de surface (14), des zones sans structures de surface (14) ou des structures de surface (14) différentes sont prévues, en particulier sous la forme d'un logo ou d'une inscription.

9. Feuille de scellement multicouche selon l'une des revendications 1 à 8, **caractérisée en ce que** la feuille de scellement (10) est une feuille de polyéthylène produite par un procédé d'extrusion de feuille soufflée ou de feuille plate.

10. Feuille de scellement multicouche selon l'une des revendications 1 à 9, **caractérisée en ce que** la feuille de scellement (10) est exempt d'additif anti-adhérent.

11. Feuille stratifiée constituée d'une couche de support (18) et d'une feuille de scellement (10) formant une couche de scellement multicouche (11) selon l'une des revendications 1 à 10, dans laquelle les structures de surface (14) sont formées sur la première face de la feuille de scellement (10) et la seconde face opposée de la feuille de scellement (10) est reliée à la couche de support (18).

12. Feuille stratifiée selon la revendication 11, **caractérisée en ce que** la couche de support (18) et la couche de scellement (11) sont reliées par une couche adhésive, ou **en ce que** la couche de scellement (11) est extrudée sur la couche de support (18).

13. Feuille stratifiée selon la revendication 11 ou 12, **caractérisée en ce que** la couche de support (18) comprend une couche de base (12).

14. Feuille stratifiée selon la revendication 11 à 12, **caractérisée en ce que** la couche de support (18) comprend une couche de base (12) et une couche formant barrière (13), la couche formant barrière étant disposée entre la couche de base (12) et la couche de scellement (11).

15. Emballage constitué d'une feuille stratifiée (16) selon l'une des revendications 11 à 14, l'emballage (1) étant fabriqué par pliage et par scellement de la feuille stratifiée (16), ou l'emballage (1) étant réalisé sous la forme d'un récipient (20) comportant un bord périphérique (22) sur lequel une plaque (21) constituée de la feuille stratifiée (10) est scellée.

16. Emballage selon la revendication 15, **caractérisé en ce que** des cordons de scellement (2, 3) se chevauchant sont produits par pliage et par scellement, **en ce que** des structures de surface (14) sont incorporées sur la feuille de scellement (10) au moins aux endroits où le scellement est effectué, et **en ce que** des feuilles stratifiées (16), lesquelles sont en contact les unes avec les autres lors du scellement, sont pressées ensemble et comprimées avec la feuille de scellement (10), en particulier dans la zone de chevauchement de plusieurs cordons de scellement (2, 3), afin d'éviter la formation de canaux d'air (4) dans la zone de chevauchement.
